# EUROPÄISCHE PATENTSCHRIFT

(11) **EP 3 001 884 B1**
(45) Veröffentlichungstag und Bekanntmachung des Hinweises auf die Patenterteilung: **27.06.2018**
(21) Anmeldenummer: 14747329.2
(22) Anmeldetag: 22.07.2014
(51) Int. Cl.: H04L 29/06, H04L 29/08, H04L 12/24

(54) **VERFAHREN, VORRICHTUNG UND SYSTEM ZUR ÜBERWACHUNG EINER SICHERHEITS-NETZÜBERGANGSEINHEIT**
METHOD, DEVICE AND SYSTEM FOR MONITORING A SECURITY GATEWAY
PROCÉDÉ, DISPOSITIF ET SYSTÈME DE SURVEILLANCE D'UNE PASSERELLE DE SÉCURITÉ

(30) Priorität: 23.08.2013 DE 102013216847
(43) Veröffentlichungstag der Anmeldung: 06.04.2016
(73) Patentinhaber: Siemens Aktiengesellschaft, 80333 München (DE)
(72) Erfinder: FALK, Rainer, 85586 Poing (DE); VON OHEIMB, David, 85551 Heimstetten (DE); BLÖCHER, Uwe, 82178 Puchheim (DE)
(86) Internationale Anmeldenummer: PCT/EP2014/065714
(87) Internationale Veröffentlichungsnummer: WO 2015/024722

(56) Entgegenhaltungen:
- DE-A1-102011 007 387
- US-A1- 2003 105 976
- US-A1- 2005 076 235

## Beschreibung

Die Erfindung bezieht sich auf ein Verfahren, eine Vorrichtung und ein System sowie ein Computerprogramm und ein Speichermedium zur Überwachung einer Netzübergangseinheit, die einen Strom von Datenpaketen über eine erste Schnittstelle empfängt, diesen Datenstrom gegenüber Filterregeln überprüft und an eine zweite Schnittstelle ausgibt.

Sicherheits-Netzübergangseinheiten, beispielsweise Firewalls, werden an Netzwerkgrenzen installiert, um eine kontrollierte Kopplung unterschiedlich kritischer Netzwerkbereiche zu realisieren. Es erfolgt dabei eine Filterung des Datenverkehrs, sodass nur zulässiger Datenverkehr durchgelassen wird. In industriellen Automatisierungssystemen, wie zum Beispiel einem Stellwerk oder einer Zugsteuerung in der Bahnautomatisierung, in beispielsweise Produktionshallen der Fertigungsautomatisierung, oder beispielsweise in Raffinerien oder Brauereien in der Prozessautomatisierung, werden bezüglich Sicherheit kritische Automatisierungsbereiche mit allgemeinen Netzen, beispielsweise einem Büronetzwerk, gekoppelt. Dazu werden Sicherheitsgateways beziehungsweise Firewalls eingesetzt und so konfiguriert, dass nur zugelassener Datenverkehr passieren kann.

Dabei wird der Datenstrom gemäß konfigurierbaren Filterregeln gefiltert. Bedingt durch Fehler in einer Implementierung der Sicherheits-Netzübergangseinheit oder durch Fehler in ihrer Konfiguration, insbesondere ihrer Filterregeln, oder auch durch eine Kompromittieren der Sicherheits-Netzübergangseinheit durch einen Angriff auf diese Einheit selbst besteht die Möglichkeit, dass eine Sicherheits-Netzübergangseinheit fehlerhaft arbeitet und eigentlich nicht zulässige Datenpakete durchlässt.

Bislang werden mögliche Unzulänglichkeiten einer Sicherheits-Netzübergangseinheit dadurch abgemildert, dass mehrere Sicherheits-Netzübergangseinheiten, beispielsweise mehrere Firewalls, hintereinander geschaltet werden. Dabei werden insbesondere Netzübergangseinheiten unterschiedlicher Hersteller verwendet. Dies hat jedoch den Nachteil, dass durch längere Bearbeitungszeiten die Verzögerung beziehungsweise der Jitter zunehmen und somit die Anforderungen für Echtzeitkommunikation nicht erfüllt werden.

Die US 2003/105976 A1 offenbart ein Datenstrom-basiertes Eindringungs-Erkennungssystem (Intrusion Detection System), das Datenpakete eines Datenstroms verschiedenen Kommunikationsverbindungen, insbesondere den verschiedenen Kommunikationspartnern, zuordnet. Für jeden Datenstrom einer solchen Kommunikationsverbindung werden statistische Angaben aus den Headern der Datenpakete ermittelt. Verdächtige Ereignisse während der Kommunikationsverbindung werden in einem Besorgniswert gesammelt und den Kommunikationspartnern zugeordnet. Beim Überschreiten eines vorgegebenen Schwellwerts wird ein Alarm ausgelöst.

Die US 2005/076235 A1 offenbart ein Testverfahren für ein IP Paketnetz zur Übertragung von Sprache, das die Angreifbarkeit eines Voice over IP Netzes durch verzögertes Öffnen und Schließen von Daten-Ports ermittelt.

Andererseits müssen die Filterregeln in einer Sicherheits-Netzübergangseinheit kontinuierlich aktualisiert werden, um einen Schutz insbesondere gegen neue Angriffe, beispielsweise durch Viren oder Würmer, abwehren zu können. In manchen Industrieautomatisierungsumgebungen gelten hohe Anforderungen an die Integrität, sodass Sicherheits-Netzübergangseinheiten beziehungsweise die darin implementierten Filterregeln zugelassen werden müssen und eine Änderung bzw. Aktualisierung der Konfiguration der Sicherheits-Netzübergangseinheiten oder der Filterregeln bzw. der Anti-Viren-Software nicht zulässig ist. Zudem muss sichergestellt werden, dass der Datenstrom durch eine Sicherheits-Netzübergangseinheit in das Automatisierungsnetz nicht verändert wird, insbesondere dass keine zusätzlichen Datenpakete durch die Netzübergangseinheit in das Automatisierungsnetz eingespeist werden.

In der DE 10 2011 007 387 ist beispielsweise eine Selbstüberwachung einer Sicherheits-Netzübergangseinheit bekannt. Dabei wird überprüft, ob zu einem ausgehenden Datenpaket ein korrespondierendes eingehendes Datenpaket empfangen wurde. Dadurch kann sichergestellt werden, dass eine Netzübergangseinheit nicht bei einer Fehlfunktion selbst Datenpakete erzeugt.

Es ist somit die Aufgabe der vorliegenden Erfindung ein Verfahren, eine Vorrichtung und ein System zu schaffen, das einen unzulässigen Datenverkehr beim Übergang in ein sicherheitsrelevantes Datennetzwerk zuverlässig filtert und auch bei fehlerhafter Sicherheits-Netzübergangseinheit eine Daten-Integrität im sicherheitsrelevanten Datennetzwerk gewährleistet. Dabei soll eine Rückwirkungsfreiheit der Sicherheits-Netzübergangseinheit sichergestellt sein, d.h. es dürfen keine zusätzlichen Datenpakete durch die Sicherheits-Netzübergangseinheit in das Sicherheitsnetz eingebracht werden.

Die Aufgabe wird durch die in den unabhängigen Ansprüchen beschriebenen Maßnahmen gelöst. In den Unteransprüchen sind vorteilhafte Weiterbildungen der Erfindung dargestellt.

Das erfindungsgemäße Verfahren zur Überwachung einer Sicherheits-Netzübergangseinheit, beispielsweise einer Firewall, die einen Strom von Datenpaketen über eine erste Schnittstelle empfängt, diesen Datenstrom gegenüber Filterregeln überprüft und an eine zweite Schnittstelle ausgibt, umfasst die Verfahrensschritte des Duplizierens und Auskoppelns des Datenstroms an der zweiten Schnittstelle, des Überprüfens des ausgekoppelten Datenstroms auf unzulässigen Datenverkehr, des Sendens einer Warnnachricht an die Sicherheits-Netzübergangseinheit, wenn unzulässiger Datenverkehr im Datenstrom erkannt wird, und des Beschränkens des Datenstroms durch die Sicherheits-Netzübergangseinheit, wenn die Warnnachricht in der Sicherheits-Netzübergangseinheit (23) empfangen wird.

Da der Datenstrom an der zweiten Schnittstelle abgegriffen wird, die hinter der Sicherheits-Netzübergangseinheit und innerhalb des sicherheitsrelevanten Datennetzes liegt, kann eine Fehlfunktion der Sicherheits-Netzübergangseinheit durch ein Überprüfen dieses gefilterten Datenstroms erkannt werden. Ein weiterer Vorteil ist, dass bei einem solchen Verdacht, die Sicherheits-Netzübergangseinheit darüber informiert wird und somit sehr zeitnah Maßnahmen zur Beschränkung des Datenstroms veranlassen kann. Ein Einbringen von Nachrichten in das sicherheitsrelevante Datennetz selbst, das heißt in die zweite Schnittstelle, wird dabei verhindert, da lediglich eine Beschränkung des Datenstroms durch die Sicherheits-Netzübergangseinheit, insbesondere Firewall, als Konsequenz aus dem Melden des Verdachts erfolgt. Somit kann beispielsweise eine zulassungspflichtige oder zertifizierte Sicherheits-Netzübergangseinheit durch aktualisierte Filtersoftware in einer Überwachungseinheit überwacht werden, ohne die Konfiguration beziehungsweise den Softwarestand der Netzübergangseinheit selbst anpassen und damit neu zulassen oder zertifizieren zu müssen. Bei einem Hinweis auf unzulässigen Datenverkehr wird der Datenverkehr durch die Sicherheits-Netzübergangseinheit eingeschränkt. Die Sicherheits-Netzübergangseinheit kann, eventuell durch Zusatzinformationen, in der Warnnachricht geeignete Maßnahmen abhängig von der Zusatzinformation ergreifen.

Des Weiteren umfasst das erfindungsgemäße Verfahren die zusätzlichen Verfahrensschritte des Duplizierens und Auskoppelns des Datenstroms an der ersten Schnittstelle, ein Vergleichen des Datenstroms an der ersten Schnittstelle mit dem Datenstrom an der zweiten Schnittstelle und eines Sendens einer Warnnachricht an die Sicherheits-Netzübergangseinheit, wenn sich der Datenstrom der zweiten Schnittstelle von dem Datenstrom der ersten Schnittstelle unterscheidet.

Dies hat den Vorteil, dass durch die auch Sicherheits-Netzübergangseinheit erfolgreich abgewehrter unzulässiger Datenverkehr erkannt wird. Es kann hierbei, abhängig von getroffenen Vorgaben, konfiguriert werden, dass ein Wechsel in eine restriktive Betriebsart der Sicherheits-Netzübergangseinheit, beispielsweise einer Firewall, erfolgt. Es wird dadurch auch erkannt, wenn neue Datenpakete, die nicht auf der ersten Schnittstelle vorhanden waren, in das sicherheitsrelevante Datennetz eingebracht werden und der Datenstrom durch die Sicherheits-Netzübergangseinheit sofort beschränkt werden.

In einer vorteilhaften Ausführungsform erfolgt das Beschränken des Datenstroms durch eine Aktivierung von Ersatz-Filterregeln der Sicherheits-Netzübergangseinheit. Somit können abgestimmte und beispielsweise zugelassene Filterregeln bzw. restriktive Filterregeln für einen eingeschränkten Betrieb im Voraus definiert werden und beim Verdacht eines unzulässigen Dateneintritts in das Sicherheitsrelevante Datennetz diese Regeln sofort aktiviert werden.

Somit ist eine schnelle Abwendung der Gefahr bei möglichst geringer Ausfallzeit des Netzübergangs durchführbar.

In einer vorteilhaften Ausführungsform erfolgt das Beschränken des Datenstroms durch einen Neustart der Sicherheits-Netzübergangseinheit mit einer geschützten Start-Software oder durch einen Neustart der Sicherheits-Netzübergangseinheit mit einer Ersatz-Firmware oder durch einen Wechsel von einer aktiven virtuellen Maschine zu einer Ersatz-virtuellen Maschine in einer Firewall.

Durch einen Neustart der Sicherheits-Netzübergangseinheit kann in vielen Fällen eine Manipulation an der Software der Netzübergangseinheit rückgängig gemacht werden, da bei einem Neustart die Software wieder in einen initialen Ausgangszustand versetzt wird. Bei eingebetteten Systemen, sogenannten Embedded Systems, kann ein Neustart mit einer Ersatz-Firmware, die entweder dem Ausgangszustand der ursprünglichen Netzübergangseinheit entspricht oder strengere Filterregeln umfasst, zurückgesetzt werden. Die Ersatz-Firmware kann dabei in einen Nurlesespeicher (Read Only Memory) oder in einen Flash-Speicher abgelegt sein, die im regulären Betrieb der Firewall nicht modifizierbar sind. Bei der Implementierung einer Sicherheits-Netzübergangseinheit als virtuelle Maschine, kann ein entsprechender Effekt durch einen Wechsel von einer aktiven virtuellen Maschine in eine Ersatz-virtuelle Maschine erzielt werden. Dabei sind die Ausfallzeiten während des Wechsels besonders gering. Der Datenverkehr in das Sicherheitsrelevante Datennetz wird somit nur sehr kurz unterbrochen.

In einer weiteren vorteilhaften Ausführungsform erfolgt das Beschränken des Datenstroms durch Deaktivierung der zweiten und/oder durch Deaktivierung der ersten Schnittstelle der Firewall.

Wird die zweite Schnittstelle deaktiviert, wird definitiv sichergestellt, dass keine weiteren Daten in das Sicherheitsnetz eindringen können. Durch ein Deaktivieren der ersten Schnittstelle der Netzübergangseinheit wird ein Überlaufen der Filter beziehungsweise ein Schädigen der Sicherheits-Netzübergangseinheit durch den eintreffenden Datenstrom vermieden.

In einer weiteren vorteilhaften Ausführungsform erfolgt das Beschränken des Datenstroms durch Deaktivieren einer Stromversorgung der Sicherheits-Netzübergangseinheit.

Somit ist eine physikalische Unterbrechung des Datenstroms über die Netzwerkgrenze hinweg sichergestellt. Diese Maßnahme hat den Vorteil, dass sie für jegliche Sicherheits-Netzübergangseinheit einsetzbar ist, ungeachtet eventuell vorhandender beziehungsweise nicht vorhandener Möglichkeiten zur Datenbegrenzung an der Netzübergangseinheit. Dadurch wird mit sehr hoher Zuverlässigkeit sichergestellt, dass keine Datenkommunikation über die Sicherheits-Netzübergangseinheit erfolgt. Auch kann dadurch erreicht werden, dass ggf. auf der Sicherheits-Netzübergangseinheit dauerhaft gespeicherte Logdaten und der Softwarestand für eine spätere Auswertung verfügbar sind, d.h. nicht überschrieben oder gelöscht werden.

In einer Ausführungsform bleibt die Beschränkung der Sicherheits-Netzübergangseinheit solange aktiv, wie die Warnnachricht an der Firewall empfangen wird.

Dies hat den Vorteil, dass nach Behebung der Sicherheitslücke die Datenkommunikation über die Netzwerkgrenze hinweg sofort wieder aktiv geschalten werden kann. Ausfallzeiten werden somit minimiert.

In einer weiteren Ausführungsform bleibt die Beschränkung der Netzübergangseinheit solange aktiv, bis ein explizites Signal zur Aufhebung der Beschränkung, bevorzugt durch eine Handlung von Administrationspersonal, an der Sicherheits-Netzübergangseinheit empfangen wird.

Dies hat den Vorteil, dass erst nach Sicherstellung der Behebung des Mangels beziehungsweise nach Durchführung aller gewünschter Maßnahmen die Netzübergangseinheit wieder in Betrieb geht. In einer Variante ist dazu eine lokale Eingabeschnittstelle an der Sicherheits-Netzübergangseinheit vorgesehen, die in Form eines Tasters oder Schlüsselschalters realisiert ist.

Die erfindungsgemäße Vorrichtung zur Überwachung einer Sicherheits-Netzübergangseinheit, die einen Strom von Datenpaketen über eine erste Schnittstelle empfängt, diesen Datenstrom gegenüber Filterregeln überprüft und an eine zweite Schnittstelle ausgibt, umfasst eine Auskoppeleinheit, die ausgebildet ist, um den Datenstrom an der zweiten Schnittstelle zu duplizieren und in eine Leitung auszukoppeln, eine Überprüfungseinheit, die ausgebildet ist um den ausgekoppelten Datenstrom auf unzulässigen Datenverkehr zu überprüfen und eine Kommunikationseinheit, die ausgebildet ist, um eine Warnnachricht an die Sicherheits-Netzübergangseinheit zu senden, wenn unzulässiger Datenverkehr im Datenstrom erkannt wird.

Diese Vorrichtung kann vorteilhafterweise eine Sicherheits-Netzübergangseinheit mit beispielsweise fest vorgegebenen und nur schwer anpassbaren Filterregeln durch Überprüfen des von der Netzübergangseinheit ausgegebenen Datenstroms mit einer mit den neuesten Sicherheitsregeln ausgestatteten Vorrichtung zu überprüfen und somit auch neue Angriffsmethoden, beziehungsweise unzulässige Daten, zu erkennen. Da die Vorrichtung keinen Einfluss auf den Datenstrom auf der zweiten Schnittstelle hat, wirkt die Vorrichtung rückwirkungsfrei, also ohne einen Eingriff in das Sicherheitsrelevante Datennetzwerk, in das die Daten übergeben werden. Dennoch ist eine schnelle Reaktion zur Beschränkung des Datenstroms auf der zweiten Schnittstelle gegeben. Dies ist insbesondere von Vorteil, wenn die eigentliche Sicherheits-Netzübergangseinheit nicht oder nur eingeschränkt aktualisiert werden kann, das heißt Filterregeln aktualisiert oder gepatcht werden können, zum Beispiel wegen einer geforderten Zertifizierung oder Zulassung, die bei einer Aktualisierung wiederholt werden muss. Die Vorrichtung, im Weiteren auch Überwachungsvorrichtung genannt, kann dagegen, da sie rückwirkungsfrei auf die zulässige Kommunikation ist, flexibel aktualisiert werden. Solange dabei die "aktive" Sicherheits-Netzübergangseinheit hinreichend gut ist, kann eine nicht aktualisierte Sicherheits-Netzübergangseinheit in Betrieb bleiben. Sobald aber das Auftreten von unzulässigem Datenverkehr beobachtet wird, wird die Konnektivität von außen eingeschränkt.

Des Weiteren umfasst die Vorrichtung eine zusätzliche Auskoppeleinheit, die ausgebildet ist, um den Datenstrom auf der ersten Schnittstelle zu duplizieren und auszukoppeln und eine Vergleichseinheit, die ausgebildet ist, um den ausgekoppelten Datenstrom der ersten Schnittstelle mit dem Datenstrom der zweiten Schnittstelle zu vergleichen und bei Erkennen von Unterschieden zwischen dem Datenstrom der zweiten Schnittstelle und dem Datenstrom der ersten Schnittstelle die Kommunikationseinheit zu veranlassen, eine Warnnachricht an die Sicherheits-Netzübergangseinheit zu senden.

Vorteilhafterweise wird dadurch erkannt, dass die Netzübergangseinheit erfolgreich unzulässigen Datenverkehr abwehrt und andererseits wird erkannt, wenn die Netzübergangseinheit selbst fehlerhaft, beispielsweise durch Manipulation verändert, arbeitet und beispielsweise zusätzliche Datenpakete, die nicht über die erste Schnittstelle empfangen wurde, an die zweite Schnittstelle ausgibt.

Das vorteilhafte System zur Überwachung einer Sicherheits-Netzübergangseinheit umfasst eine Sicherheits-Netzübergangseinheit, die derart ausgebildet ist, um einen Strom von Datenpaketen über eine erste Schnittstelle zu empfangen, diese Daten gegenüber Filterregeln zu überprüfen und an eine zweite Schnittstelle auszugeben und eine Überwachungseinheit mit einer Auskoppeleinheit, die ausgebildet ist zum Duplizieren und Auskoppeln des Datenstroms an der zweiten Schnittstelle, mit einer Überprüfungseinheit zum Überprüfen des ausgekoppelten Datenstroms auf unzulässigen Datenverkehr, und einer Kommunikationseinheit, die ausgebildet ist zum Senden einer Warnnachricht an die Sicherheits-Netzübergangseinheit, wenn unzulässiger Datenverkehr im Datenstrom erkannt wird, woraufhin die Sicherheits-Netzübergangseinheit eingerichtet ist, den Datenstrom zu beschränken.

Die Warnnachricht kann in einer Variante als elektrisches Schaltsignal bereitgestellt werden.

Die Überwachungseinheit umfasst zusätzlich eine Auskoppeleinheit, die ausgebildet ist, um den Datenstrom auf der ersten Schnittstelle zu duplizieren und auszukoppeln und eine Vergleichseinheit, die ausgebildet ist, um den ausgekoppelten Datenstrom der ersten Schnittstelle mit dem Datenstrom der zweiten Schnittstelle zu vergleichen und bei Erkennen von Unterschieden zwischen dem Datenstrom der zweiten Schnittstelle und dem Datenstrom der ersten Schnittstelle die Kommunikationseinheit zu veranlassen, eine Warnnachricht an die Sicherheits-Netzübergangseinheit zu senden.

Zusätzlich wird ein Computerprogramm mit Programmbefehlen zur Durchführung des Verfahrens sowie ein Datenträger, der das Computerprogramm speichert, beansprucht.

Ausführungsbeispiele des erfindungsgemäßen Verfahrens, der erfindungsgemäßen Vorrichtung und des erfindungsgemäßen Systems sind in den Zeichnungen beispielhaft dargestellt und werden anhand der nachfolgenden Beschreibung näher erläutert. Es zeigen:
- Fig. 1a: eine beispielhafte Ausführungsform eines bekannten Verfahrens als Ablaufdiagramm;
- Fig. 1b: eine zweite beispielhafte Ausführungsform des erfindungsgemäßen Verfahrens als Ablaufdiagramm;
- Fig. 1c: eine dritte beispielhafte Ausführungsform des erfindungsgemäßen Verfahrens als Ablaufdiagramm;
- Fig. 2: ein Ausführungsbeispiel eines Systems mit einer Auskopplung des Datenstroms lediglich auf einer zweiten Schnittstelle, in schematischer Darstellung; und
- Fig. 3: ein Ausführungsbeispiel eines erfindungsgemäßen Systems mit einer Auskopplung des Datenstroms an einer ersten und an einer zweiten Schnittstelle in schematischer Darstellung.

Einander entsprechende Teile sind in allen Figuren mit den gleichen Bezugszeichen versehen. Im Weiteren wird die Sicherheits-Netzübergangseinheit auch lediglich mit Netzübergangseinheit bezeichnet.

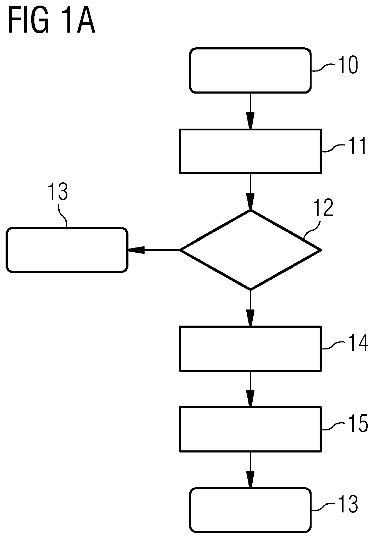

Fig. 1a zeigt das vorgeschlagene Verfahren um die korrekte Funktion einer Netzübergangseinheit rückwirkungsfrei zu überwachen. Dabei bedeutet Rückwirkungsfreiheit, dass das Datennetzwerk, in das der Datenverkehr übergegeben wird, durch die Netzübergangseinheit nicht beeinflusst wird. Insbesondere werden keine zusätzlichen Datenpakete an ein solches beispielsweise sicherheitsrelevantes Automatisierungsnetz durch die Netzübergangseinheit erzeugt und ausgegeben.

Im Zustand 10 des Verfahrens empfängt die Sicherheits-Netzübergangseinheit auf einer ersten Schnittstelle einen Datenstrom von einem ersten Datennetz und gibt den Datenstrom nach einer Überprüfung auf eine zweite Schnittstelle in ein zweites Datennetz, beispielsweise ein sicherheitsrelevantes Automatisierungsnetzwerk, aus.

Im ersten Verfahrensschritt 11 wird der Datenstrom an der zweiten Schnittstelle, das heißt bereits innerhalb des zweiten Datennetzwerks, der Datenstrom dupliziert und beispielsweise in eine separate Leitung ausgekoppelt. Dabei muss sichergestellt sein, dass der Datenstrom innerhalb des sicherheitsrelevanten Netzes und vor Komponenten, die den Datenstrom verändern, ausgekoppelt wird. Daraufhin wird im Verfahrensschritt 12 der ausgekoppelte Datenstrom auf unzulässigen Datenverkehr überprüft. Die Überprüfung 12 kann beispielsweise durch Filterregeln entsprechend den aktiven Filterregeln der Netzübergangseinheit stattfinden. Vorzugsweise wird der ausgekoppelte Datenstrom aber durch erweiterte, beispielsweise mit den neuesten Anti-Virus-Patchen aktualisierte Filterregeln überprüft. Typischerweise werden dabei eine IP-Adresse der Datenpakete und/oder die Portnummern im Datenpaket oder die Nutzdateninhalte im Datenpaket überprüft oder es wird nach gezielten Angriffsmustern über mehrere Datenpakete hinweg der Datenstrom untersucht.

Das Überprüfen 12 findet vollkommen entkoppelt von der Überprüfung des Datenstroms in der Netzübergangseinheit statt. Der Datenstrom auf der zweiten Schnittstelle wird weder zeitlich verzögert noch inhaltlich verändert. Somit bleibt die Überprüfung 12 des ausgekoppelten Datenstroms völlig unsichtbar und somit rückwirkungsfrei für das den Datenstrom empfangende Netzwerk. Wird der Datenstrom als zulässiger Datenverkehr erkannt, werden die Datenpakete an die zweite Schnittstelle ausgegeben und das Verfahren ist beendet, siehe Verfahrensschritt 13.

Wird im Datenstrom unzulässiger Datenverkehr erkannt, wird im Verfahrensschritt 14 eine Warnnachricht an die Netzübergangseinheit gesendet. Erhält die Netzübergangseinheit die Warnnachricht, so veranlasst sie ein Beschränken des Datenstroms, siehe Verfahrensschritt 15. Das Verfahren ist damit beendet, siehe Verfahrensschritt 13.

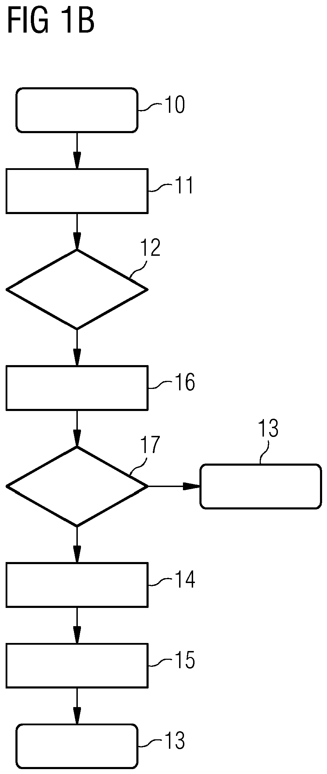

In einer Variante des Verfahrens, die in Fig. 1b dargestellt ist, erfolgt für ein Datenpaket der zweiten Schnittstelle, das nicht bereits in Schritt 12 als zulässig erkannt wurde, zusätzlich eine Prüfung abhängig von dem an der ersten Schnittstelle empfangenen Datenstrom. Dazu wird ein an der ersten Schnittstelle der Netzübergangseinheit duplizierter und ausgekoppelter Datenstrom erfasst, siehe Verfahrensschritt 16. Im nächsten Verfahrensschritt 17 wird dann der ausgekoppelte Datenstrom der ersten Schnittstelle zur weiteren Prüfung des Datenpakets herangezogen.

Es kann z.B. an der zweiten Schnittstelle eine Statusnachricht, z.B. eine Überlastnachricht oder eine Wartungsmodusnachricht, durch die Netzübergangseinheit ausgesendet werden, was in diesem Beispiel nur dann zulässig ist, wenn an der ersten Schnittstelle des Netzübergangs bestimmte Datenpakete empfangen wurden. Es kann z.B. geprüft werden, ob ein Denial-of-Service-Angriffsmuster an der ersten Schnittstelle der Netzübergangseinheit vorliegt bzw. ob ein Wartungszugang (Remote Service Access) zur Netzübergangseinheit über die erste Schnittstelle der Netzübergangseinheit stattfindet, z.B. über eine HTTPS- oder SSH-Verbindung.

Wird der Datenstrom bei der Überprüfung im Verfahrensschritt 17 als zulässiger Datenverkehr erkannt, werden die Datenpakete an die zweite Schnittstelle ausgegeben und das Verfahren ist beendet, siehe Verfahrensschritt 13. Wird das Paket der zweiten Schnittstelle als unzulässig erkannt, wird auch hier eine Warnnachricht an die Netzübergangseinheit im Verfahrensschritt 14 gesendet, woraufhin die Netzübergangseinheit eine Beschränkung des Datenstroms veranlasst, siehe Verfahrensschritt 15.

In einer weiteren Ausführungsform des Verfahrens wird der in die Sicherheits-Netzübergangseinheit eingehende Datenstrom an der ersten Schnittstelle dupliziert und ausgekoppelt und dann zusätzlich der ausgekoppelte Datenstrom der ersten Schnittstelle mit dem ausgekoppelten Datenstrom der zweiten Schnittstelle verglichen. Diese Überprüfung kann parallel zu der in Fig. 1a oder Fig. 1b dargestellten Überprüfungen erfolgen.

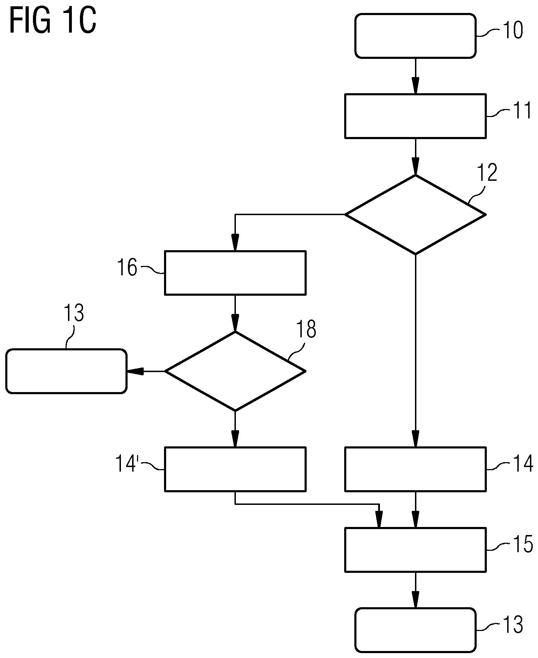

In der in Fig. 1c dargestellten Variante erfolgt diese zusätzliche Überprüfung 18, falls in Schritt 12 der Datenstrom als zulässiger Datenverkehr erkannt wird. Dazu wird ein an der ersten Schnittstelle der Netzübergangseinheit duplizierte und ausgekoppelte Datenstrom erfasst, siehe Verfahrensschritt 16. Im nächsten Verfahrensschritt 18 wird dann der ausgekoppelte Datenstrom der ersten Schnittstelle zur weiteren Prüfung des Datenpakets herangezogen. Für das an der zweiten Schnittstelle empfangenes Datenpaket wird dabei geprüft, ob ein identisches Paket im Datenstrom der ersten Schnittstelle vorlag bzw. in einem bestimmten zurückliegenden Zeitfenster im Datenstrom der ersten Schnittstelle vorlag. Ist dies der Fall, so ist diese Überprüfung abgeschlossen siehe Verfahrensschritt 13. Wird jedoch eine Inkonsistenz in den beiden Datenströmen festgestellt, wird auch hier eine Warnnachricht an die Netzübergangseinheit im Verfahrensschritt 14' gesendet, woraufhin die Netzübergangseinheit eine Beschränkung des Datenstroms veranlasst, siehe Verfahrensschritt 15.

Diese zusätzliche, in Fig. 1c dargestellte Überprüfung, kann auch entsprechend in der in Fig. 1b dargestellten Variante ergänzt werden.

Durch den Vergleich des eingehenden Datenstroms mit dem ausgehenden Datenstrom kann einerseits detektiert werden, dass eine Filterung durch die Netzübergangseinheit stattgefunden hat, das heißt wenn unzulässige eingehende Datenpakete nicht im ausgehenden Datenstrom enthalten sind. Werden im ausgehenden Datenstrom auf der zweiten Schnittstelle dagegen Datenpakete detektiert, die nicht auf der ersten Schnittstelle in die Netzübergangseinheit eingegangen sind, so kann ebenfalls auf einen Fehler in der Netzübergangseinheit geschlossen werden. Insbesondere kann dadurch detektiert werden, wenn die Netzübergangseinheit ein Datenpaket nicht entweder blockt oder unverändert weiterleitet, sondern ein modifiziertes Datenpaket oder ein zusätzliches Datenpaket aussendet. Es kann dabei also erkannt werden, wenn die Netzübergangseinheit ein Datenpaket aussendet, das sie nicht vorher auch tatsächlich empfangen hat.

Durch die Warnnachricht wird die Netzübergangseinheit beispielsweise dazu veranlasst auf einen restriktiven Filterungsmodus, beispielsweise durch Aktivierung von Ersatz-Filterregeln, zu wechseln. Durch die Warnnachricht kann in einer Variante die Netzübergangseinheit zu einem Neustart veranlasst werden, der vorzugsweise mit einem unveränderten, gestützten Software-Stand, beziehungsweise Boot-Image, ausgeführt wird, sodass wieder eine fest hinterlegte, zulässige Default-Konfiguration beziehungsweise Recovery-Konfiguration aktiviert wird. Ist die Netzübergangseinheit als ein eingebettetes System ausgebildet, wird der Arbeitsspeicher bei einem Neustart in einen initialen Zustand zurückgesetzt. Somit kann eine fehlerhafte oder manipulierte Software-Version deaktiviert werden.

Alternativ kann ein Neustart der Netzübergangseinrichtung mit einem Ersatz-Firmware-Abbild vorgesehen sein. Es können zum Beispiel zwei Dateisystem-Partitionen mit unterschiedlichen Implementierungen der Netzübergangseinheit vorgesehen sein. Beim Empfang einer Warnnachricht in der Netzübergangseinrichtung erfolgt ein Neustart, wobei die Dateisystem-Partition mit der restriktiven Implementierung gestartet wird.

Ist die Netzübergangseinheit als virtuelle Maschine mit einem Hypervisor beziehungsweise Microvisor implementiert, so liegen mehrere logische Partitionen separiert als virtuelle Maschinen oder auch Partitionen vor. Eine Datenpaketfilterung erfolgt dabei in einer virtuellen Maschine. Bei Anlegen der Warnnachricht wird eine erste virtuelle Maschine deaktiviert und eine Ersatz-virtuelle Maschine mit restriktiven Filterregelungen und/oder einer alternativen Filterrealisierung aktiviert. Ein solcher Wechsel ist in weniger als einer Sekunde, insbesondere im Bereich von Millisekunden möglich und erlaubt somit ein nahezu unterbrechungsfreien Betrieb der Netzübergangseinrichtung.

In einer Variante ist hierbei die Überwachungseinheit als separate physische Komponente realisiert. In einer anderen Variante ist die Überwachungseinheit als virtuelle Maschine realisiert, die durch denselben Hypervisor bzw. Microvisor wie die Netzübergangseinheit ausgeführt wird.

Des Weiteren kann bei Anlegen beziehungsweise bei Empfang der Warnnachricht eine oder beide Schnittstellen deaktiviert werden. Bevorzugt wird die zweite Schnittstelle deaktiviert, sodass keine Datenpakete an die zweite Schnittstelle ausgegeben werden. Ebenfalls von Vorteil ist es die erste Schnittstelle zu deaktivieren um ein Überlaufen der Speicher in der Netzübergangseinheit zu vermeiden. Ebenso kann ein Deaktivieren der ersten Schnittstelle einen Abbruch des Datenverkehrs in das Sicherheitsrelevante Datennetz bewirken.

Eine sehr universell anwendbare Variante zur Beschränkung des Datenverkehrs ist es, die Stromversorgung der Netzübergangseinheit zu deaktivieren, das heißt stromlos zu schalten. Dies ist mit sehr geringem Aufwand zum Beispiel durch eine schaltbare Stromversorgungseinheit der Netzübergangseinheit ohne eine Änderung in der Konfiguration oder Implementierung der Netzübergangseinheit selbst möglich. Somit können auch Netzübergangseinheiten, die keine expliziten Beschränkungsmechanismen unterstützten, durch dieses Verfahren überwacht und der Datenverkehr eingeschränkt werden.

In einer Ausführungsform des Verfahrens bleibt der restriktive, beschränkende Modus der Netzübergangseinheit so lange aktiviert, wie die Warnnachricht an der Netzübergangseinheit anliegt. Vorzugsweise bleibt der restriktive Modus jedoch so lange aktiv, bis ein expliziter Wechsel in einen regulären Modus durch eine administrative Handlung erfolgt. Beispielsweise kann der reguläre Modus durch einen Tastendruck eines physikalischen Tasters oder durch Betätigen eines Schlüsselschalters oder durch Eingabe über eine logische Administrationsschnittstelle durch Administrationspersonal ausgelöst werden. Dabei kann der reguläre Modus auch eine neue aktualisierte Filterregel umfassen. Das Verfahren geht dann in dem mit Stopp bezeichneten Endzustand über.

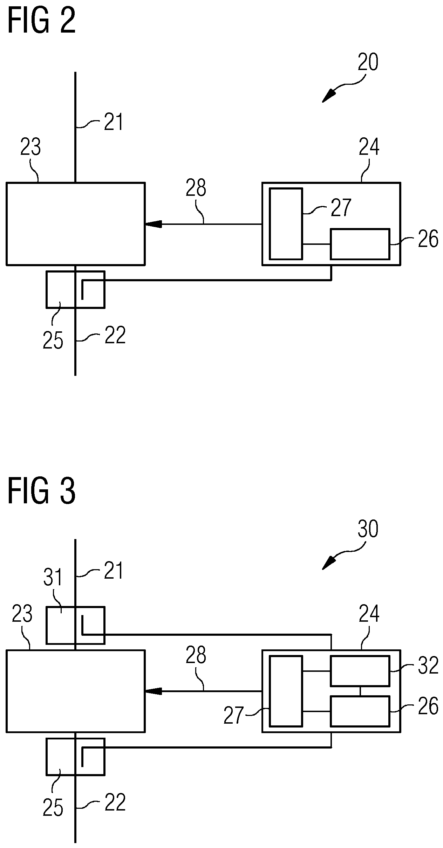

In Fig. 2 ist nun ein System aus einer Netzübergangseinheit 23 und einer Überwachungseinheit 24 dargestellt. Die Netzübergangseinheit trennt zwei Datennetze mit beispielsweise unterschiedlichen Sicherheitseinstufungen. Dabei wird beispielsweise ein Datenstrom aus einem Netzwerk mit niedriger Sicherheitsanforderung, wie einem Büronetzwerk, über eine erste Schnittstelle 21 an die Netzübergangseinheit 23 angeschlossen. Die Netzübergangseinheit 23 überprüft die Datenpakete bzw. den Strom aus Datenpaketen und gibt diesen über eine zweite Schnittstelle 22 an ein zweites Netzwerk, das beispielsweise höhere Sicherheitsanforderungen aufweist, aus.

In der Ausführungsform in Fig. 2 wird lediglich der ausgehende Datenstrom auf der zweiten Schnittstelle durch eine Auskoppeleinheit 25 dupliziert und in eine separate Leitung ausgekoppelt. Der ausgekoppelte Datenstrom wird an die Überprüfungseinheit 26 der Überwachungseinheit 24 weitergegeben und dort auf unzulässigen Datenverkehr überprüft. Dabei können insbesondere die Adressfelder im Kopf des Datenpakets auf unzulässige Herkunfts- beziehungsweise Zieladressen überprüft werden oder die Portnummer gegenüber zulässigen Portnummern verglichen werden. Liegt der Nutzinhalt des Datenpakets unverschlüsselt und somit in Klartext vor, so kann auch der Inhalt der Pakete auf beispielsweise verdächtige bzw. unzulässige Muster überprüft werden und noch vor der Beendigung der Überprüfung des Datenpakets dessen weiterleiten verhindert werden.

Die Überprüfungseinheit 26 ist mit einer Kommunikationseinheit 27 verbunden. Wird in der Überprüfungseinheit 26 unzulässiger Datenverkehr erkannt, meldet die Überprüfungseinheit 26 dies der Kommunikationseinheit 27, die wiederum eine Warnnachricht 28 an die Netzübergangseinheit 23 sendet beziehungsweise anlegt. Die Warnnachricht kann beispielsweise als elektrisches Schaltsignal bereitgestellt werden.

Fig. 3 zeigt eine Variante des Systems in Fig. 2, wobei hier neben dem ausgehenden Datenverkehr auf der zweiten Schnittstelle 22 auch der eingehende Datenstrom auf dem ersten Interface 21 durch eine zusätzliche Auskoppeleinheit 31 dupliziert und auf eine Leitung zur Überwachungseinheit 24 ausgekoppelt wird. Die Auskoppeleinheiten 25 und 31 befinden sich bevorzugt direkt an der Netzübergangseinheit 23, sodass insbesondere keine weiteren Komponenten im Datenstrom enthalten sind, die diesen verändern könnten.

Der aus der ersten Schnittstelle 21 ausgekoppelte Datenstrom wird in der Vergleichseinheit 32, mit dem Datenstrom der zweiten Schnittstelle 22 verglichen. Der Datenstrom der zweiten Schnittstelle 22 kann über die Prüfungseinheit 26 beispielsweise an die Vergleichseinheit 32 weitergegeben werden. Die Vergleichseinheit 32 ist wiederum mit der Kommunikationseinheit 27 verbunden. Wird ein Unterschied zwischen dem Datenstrom der ersten und der zweiten Schnittstelle 21,22 detektiert, sendet die Kommunikationseinheit 27 eine Warnnachricht 28 an die Netzübergangseinheit 23. Die Verbindung zwischen Überwachungseinheit 24 und Netzübergangseinheit 23 kann dabei in Form einer Drahtverbindung oder aber einer drahtlosen Verbindung oder einer logischen Verbindung ausgeführt sein.

Alle beschriebenen und/oder gezeichneten Merkmale können im Rahmen der Erfindung vorteilhaft miteinander kombiniert werden. Des Weiteren kann die Überwachungseinheit als separate Komponente oder aber mit der Netzübergangseinheit integriert ausgeführt sein.

## Patentansprüche

1. Verfahren zur Überwachung einer Sicherheits-Netzübergangseinheit (23), die einen Strom von Datenpaketen über eine erste Schnittstelle (21) empfängt, diesen Datenstrom gegenüber Filterregeln überprüft und an eine zweite Schnittstelle (22) ausgibt, mit den Verfahrensschritten:
- Duplizieren und Auskoppeln (11) des Datenstroms an der zweiten Schnittstelle (22),
- Überprüfen (12) des ausgekoppelten Datenstroms auf unzulässigen Datenverkehr,
- Senden (14) einer Warnnachricht (28) an die Sicherheits-Netzübergangseinheit (23), wenn unzulässiger Datenverkehr (12) im Datenstrom erkannt wird, und
- Duplizieren und Auskoppeln (16) des Datenstroms an der ersten Schnittstelle (21),
- Vergleichen (18) des Datenstroms an der ersten Schnittstelle (21) mit dem Datenstrom an der zweiten Schnittstelle (22),
- Senden (14') einer Warnnachricht (28) an die Sicherheits-Netzübergangseinheit (23), wenn sich der Datenstrom der zweiten Schnittstelle (22) von dem Datenstrom der ersten Schnittstelle (21) unterscheidet, und
- Beschränken (15) des Datenstroms durch die Sicherheits-Netzübergangseinheit (23), wenn die Warnnachricht (28) in der Sicherheits-Netzübergangseinheit (23) empfangen wird,
wobei das Überprüfen (12) durch Filterregeln entsprechend den aktiven Filterregeln der Netzübergangseinheit (23) oder durch erweiterte Filterregeln durchgeführt wird.

2. Verfahren nach Anspruch 1, wobei das Beschränken des Datenstroms durch eine Aktivierung von Ersatz-Filterregeln der Sicherheits-Netzübergangseinheit (23) er-folgt.

3. Verfahren nach Anspruch 1, wobei das Beschränken des Datenstroms durch einen Neustart der Sicherheits-Netzübergangseinheit (23) mit einer geschützten Start-Software oder durch einem Neustart der Sicherheits-Netzübergangseinheit (23) mit einer Ersatz-Firmware-Abbild oder durch einen Wechsel von einer aktiven Virtuellen Maschine zu einer Ersatz-Virtuellen Maschine in einer Sicherheits-Netzübergangseinheit (23) erfolgt.

4. Verfahren nach einem der Ansprüche 1 bis 3, wobei das Beschränken des Datenstroms durch Deaktivieren der zweiten Schnittstelle (22) und/oder durch Deaktivieren der ersten Schnittstelle (21) der Sicherheits-Netzübergangseinheit (23) erfolgt.

5. Verfahren nach einem der Ansprüche 1 bis 4, wobei das Beschränken des Datenstroms durch Deaktivieren einer Stromversorgungseinheit der Netzübergangseinheit (23) erfolgt.

6. Verfahren nach einem der Ansprüche 1 bis 5, wobei die Beschränkung in der Sicherheits-Netzübergangseinheit (23) solange aktiv bleibt wie die Warnnachricht (28) an der Sicherheits-Netzübergangseinheit (23) empfangen wird.

7. Verfahren nach einem der Ansprüche 1 bis 5, wobei die Beschränkung der Sicherheits-Netzübergangseinheit (23) solange aktiv bleibt bis ein explizites Signal zur Aufhebung der Beschränkung, bevorzugt durch eine Handlung von Administrations-Personal, an der Sicherheits-Netzübergangseinheit (23) empfangen wird.

8. Vorrichtung zur Überwachung einer Sicherheits-Netzübergangseinheit (23), die einen Strom von Datenpaketen über eine erste Schnittstelle (21) empfängt, diesen Datenstrom gegenüber Filterregeln überprüft und an eine zweite Schnittstelle (22) ausgibt, umfassend
- eine Auskoppeleinheit (25), die ausgebildet ist um den Datenstrom an der zweiten Schnittstelle (22) zu duplizieren und auszukoppeln,
- eine Überprüfungseinheit (26), die ausgebildet ist um den ausgekoppelten Datenstrom auf unzulässigen Datenverkehr zu überprüfen und
- eine Kommunikationseinheit (27), die ausgebildet ist um eine Warnnachricht (28) an die Sicherheits-Netzübergangseinheit (23) zu senden, wenn unzulässiger Datenverkehr im Datenstrom erkannt wird
, umfassend zusätzlich eine
- Auskoppeleinheit (31), die ausgebildet ist um den Datenstrom auf der ersten Schnittstelle (21) zu duplizieren und auszukoppeln, und
- eine Vergleichseinheit (32), die ausgebildet ist um den ausgekoppelten Datenstrom der ersten Schnittstelle (21) mit dem Datenstrom der zweiten Schnittstelle (22) zu vergleichen und bei Erkennen von Unterschieden zwischen dem Datenstrom der zweiten Schnittstelle (22) und dem Datenstrom der ersten Schnittstelle (21) die Kommunikationseinheit (27) zu veranlassen eine Warnnachricht (28) an die Sicherheits-Netzübergangseinheit (23) zu senden,
wobei das Überprüfen (12) durch Filterregeln entsprechend den aktiven Filterregeln der Netzübergangseinheit (23) oder durch erweiterte Filterregeln durchführbar ist.

9. Vorrichtung nach Anspruch 8, wobei die Vorrichtung derart ausgebildet ist um das Verfahren gemäß den Ansprüchen 3 bis 7 auszuführen.

10. System zur Überwachung einer Sicherheits-Netzübergangseinheit (23) umfassend
- eine Sicherheits-Netzübergangseinheit (23), die derart ausgebildet um einen Strom von Datenpaketen über eine erste Schnittstelle (21) zu empfangen, diesen Datenstrom gegenüber Filterregeln zu überprüfen und an eine zweite Schnittstelle (22) auszugeben,
- eine Überwachungseinheit (24) mit einer Auskoppeleinheit (25), die ausgebildet ist zum Duplizieren und Auskoppeln des Datenstroms an der zweiten Schnittstelle (22), mit einer Überprüfungseinheit (26) zum Überprüfen des ausgekoppelten Datenstroms auf unzulässigen Datenverkehr, und einer Kommunikationseinheit (27), die ausgebildet ist zum Senden einer Warnnachricht (28) an die Sicherheits-Netzübergangseinheit (23), wenn unzulässiger Datenverkehr im Datenstrom erkannt wird, woraufhin die Sicherheits-Netzübergangseinheit (23) eingerichtet ist den Datenstrom zu beschränken, wobei die Überwachungseinheit (24) eine zusätzliche
- Auskoppeleinheit (31), die ausgebildet ist um den Datenstrom auf der ersten Schnittstelle (21) zu duplizieren und auszukoppeln, und
- eine Vergleichseinheit (32), die ausgebildet ist um den ausgekoppelten Datenstrom der ersten Schnittstelle (21) mit dem Datenstrom der zweiten Schnittstelle (22) zu vergleichen und bei Erkennen von Unterschieden zwischen dem Datenstrom der zweiten Schnittstelle (22) und dem Datenstrom der ersten Schnittstelle (21) die Kommunikationseinheit (27) zu veranlassen eine Warnnachricht (28) an die Sicherheits-Netzübergangseinheit (23) zu senden, umfasst,
wobei das Überprüfen (12) durch Filterregeln entsprechend den aktiven Filterregeln der Netzübergangseinheit (23) oder durch erweiterte Filterregeln durchführbar ist.

11. System nach Anspruch 10, wobei die Sicherheits-Netzübergangseinheit (23) und die Überwachungseinheit (24) derart ausgebildet sind um das Verfahren gemäß den Ansprüchen 3 bis 8 auszuführen.

12. Computerprogramm mit Programmbefehlen zur Durchführung des Verfahrens nach Ansprüchen 1-7.

13. Datenträger, der das Computerprogramm nach Anspruch 12 speichert.

## Claims

1. Method for monitoring a security network gateway unit (23) which receives a stream of data packets via a first interface (21), checks this data stream with respect to filtering rules and outputs it to a second interface (22), having the method steps of:
- duplicating and outputting (11) the data stream at the second interface (22),
- checking (12) the output data stream for impermissible data traffic,
- transmitting (14) a warning message (28) to the security network gateway unit (23) if impermissible data traffic (12) is detected in the data stream, and
- duplicating and outputting (16) the data stream at the first interface (21),
- comparing (18) the data stream at the first interface (21) with the data stream at the second interface (22),
- transmitting (14') a warning message (28) to the security network gateway unit (23) if the data stream from the second interface (22) differs from the data stream from the first interface (21), and
- restricting (15) the data stream by means of the security network gateway unit (23) if the warning message (28) is received in the security network gateway unit (23),
- the checking (12) being carried out by means of filter rules corresponding to the active filter rules of the network gateway unit (23) or by means of extended filter rules.

2. Method according to Claim 1, the data stream being restricted by activating replacement filtering rules of the security network gateway unit (23).

3. Method according to Claim 1, the data stream being restricted by restarting the security network gateway unit (23) with protected boot software or by restarting the security network gateway unit (23) with a replacement firmware image or by changing from an active virtual machine to a replacement virtual machine in a security network gateway unit (23).

4. Method according to one of Claims 1 to 3, the data stream being restricted by deactivating the second interface (22) and/or by deactivating the first interface (21) of the security network gateway unit (23).

5. Method according to one of Claims 1 to 4, the data stream being restricted by deactivating a power supply unit of the network gateway unit (23).

6. Method according to one of Claims 1 to 5, the restriction remaining active in the security network gateway unit (23) as long as the warning message (28) is received at the security network gateway unit (23).

7. Method according to one of Claims 1 to 5, the restriction of the security network gateway unit (23) remaining active until an explicit signal for canceling the restriction, preferably as a result of an action by administration personnel, is received at the security network gateway unit (23).

8. Device for monitoring a security network gateway unit (23) which receives a stream of data packets via a first interface (21), checks this data stream with respect to filtering rules and outputs it to a second interface (22), comprising
- an outputting unit (25) which is designed to duplicate and output the data stream at the second interface (22),
- a checking unit (26) which is designed to check the output data stream for impermissible data traffic, and
- a communication unit (27) which is designed to transmit a warning message (28) to the security network gateway unit (23) if impermissible data traffic is detected in the data stream, additionally comprising
- an outputting unit (31) which is designed to duplicate and output the data stream at the first interface (21), and
- a comparison unit (32) which is designed to compare the output data stream from the first interface (21) with the data stream from the second interface (22) and to cause the communication unit (27) to transmit a warning message (28) to the security network gateway unit (23) if differences between the data stream from the second interface (22) and the data stream from the first interface (21) are detected,
- the checking (12) being able to be carried out by means of filter rules corresponding to the active filter rules of the network gateway unit (23) or by means of extended filter rules.

9. Device according to Claim 8, the device being designed to carry out the method according to Claims 3 to 7.

10. System for monitoring a security network gateway unit (23), comprising
- a security network gateway unit (23) which is designed to receive a stream of data packets via a first interface (21), to check this data stream with respect to filtering rules and to output it to a second interface (22),
- a monitoring unit (24) having an outputting unit (25) which is designed to duplicate and output the data stream at the second interface (22), having a checking unit (26) for checking the output data stream for impermissible data traffic, and having a communication unit (27) which is designed to transmit a warning message (28) to the security network gateway unit (23) if impermissible data traffic is detected in the data stream, whereupon the security network gateway unit (23) is set up to restrict the data stream, the monitoring unit (24) comprising an additional
- outputting unit (31) which is designed to duplicate and output the data stream at the first interface (21), and
- a comparison unit (32) which is designed to compare the output data stream from the first interface (21) with the data stream from the second interface (22) and to cause the communication unit (27) to transmit a warning message (28) to the security network gateway unit (23) if differences between the data stream from the second interface (22) and the data stream from the first interface (21) are detected,
- the checking (12) being able to be carried out by means of filter rules corresponding to the active filter rules of the network gateway unit (23) or by means of extended filter rules.

11. System according to Claim 10, the security network gateway unit (23) and the monitoring unit (24) being designed to carry out the method according to Claims 3 to 8.

12. Computer program having program instructions for carrying out the method according to Claims 1-7.

13. Data storage medium which stores the computer program according to Claim 12.

## Revendications

1. Procédé de surveillance d'une unité passerelle de sécurité (23), qui reçoit un flux de paquets de données via une première interface (21), contrôle ce flux de données par rapport à des règles de filtrage et l'envoie à une deuxième interface (22), comprenant les étampes :
- duplication et découplage (11) du flux de données à la deuxième interface (22),
- contrôle (12) du flux de données découplé quant à la présence d'un trafic de données illicite,
- envoi (14) d'un message d'avertissement (28) à l'unité passerelle de sécurité (23) lorsqu'un trafic de données illicite (12) est détecté dans le flux de données, et
- duplication et découplage (16) du flux de données à la première interface (21),
- comparaison (18) du flux de données à la première interface (21) avec le flux de données à la deuxième interface (22),
- envoi (14') d'un message d'avertissement (28) à l'unité passerelle de sécurité (23) lorsque le flux de données de la deuxième interface (22) diverge du flux de données de la première interface (21), et
- limitation (15) du flux de données par l'unité passerelle de sécurité (23), lorsque le message d'avertissement (28) est reçu dans l'unité passerelle de sécurité (23), le contrôle (12) étant effectué via des règles de filtrage conformément aux règles de filtrage actives de l'unité passerelle (23) ou via des règles de filtrage étendues.

2. Procédé selon la revendication 1, dans lequel la limitation du flux de données s'effectue via une activation de règles de filtrage de substitution de l'unité passerelle de sécurité (23).

3. Procédé selon la revendication 1, dans lequel la limitation du flux de données s'effectue via un redémarrage de l'unité passerelle de sécurité (23) avec un logiciel de démarrage protégé ou via un redémarrage de l'unité passerelle de sécurité (23) avec une image de logiciel d'exploitation de substitution ou via un remplacement d'une machine virtuelle active par une machine virtuelle de substitution dans une unité passerelle de sécurité (23).

4. Procédé selon l'une des revendications 1 à 3, dans lequel la limitation du flux de données s'effectue via la désactivation de la deuxième interface (22) et/ou via la désactivation de la première interface (21) de l'unité passerelle de sécurité (23).

5. Procédé selon l'une des revendications 1 à 4, dans lequel la limitation du flux de données s'effectue via la désactivation d'une unité d'alimentation électrique de l'unité passerelle (23).

6. Procédé selon l'une des revendications 1 à 5, dans lequel la limitation dans l'unité passerelle de sécurité (23) demeure active tant que l'unité passerelle de sécurité (23) reçoit le message d'avertissement (28).

7. Procédé selon l'une des revendications 1 à 5, dans lequel la limitation de l'unité passerelle de sécurité (23) demeure active jusqu'à ce qu'un signal explicite de suppression de la limitation, faisant de préférence suite à l'action d'un administrateur, soit reçu par l'unité passerelle de sécurité (23).

8. Dispositif de surveillance d'une unité passerelle de sécurité (23), qui reçoit un flux de paquets de données via une première interface (21), contrôle ce flux de données par rapport à des règles de filtrage et l'envoie à une deuxième interface (22), comprenant
- une unité de découplage (25), exécutée afin de dupliquer et de découpler le flux de données à la deuxième interface (22),
- une unité de contrôle (26), exécutée afin de contrôler le flux de données découplé quant à la présence d'un trafic de données illicite et
- une unité de communication (27) exécutée afin d'envoyer un message d'avertissement (28) à l'unité passerelle de sécurité (23) lorsqu'un trafic de données illicite est détecté dans le flux de données, comprenant en outre une
- unité de découplage (31) exécutée afin de dupliquer et de découpler le flux de données à la première interface (21), et
- une unité de comparaison (32) exécutée afin de comparer le flux de données découplé de la première interface (21) avec le flux de données de la deuxième interface (22) et, en cas de détection de différences entre le flux de données de la deuxième interface (22) et le flux de données de la première interface (21), d'ordonner à l'unité de communication (27) d'envoyer un message d'avertissement (28) à l'unité passerelle de sécurité (23), dans lequel le contrôle (12) peut s'effectuer via des règles de filtrage conformément aux règles de filtrage actives de l'unité passerelle (23) ou via des règles de filtrage étendues.

9. Dispositif selon la revendication 8, dans lequel le dispositif est exécuté afin d'exécuter le procédé conformément aux revendications 3 à 7.

10. Système de surveillance d'une unité passerelle de sécurité (23) comprenant
- une unité passerelle de sécurité (23) exécutée afin de recevoir un flux de paquets de données via une première interface (21), de contrôler ce flux de données par rapport à des règles de filtrage et de l'envoyer à une deuxième interface (22),
- une unité de surveillance (24) avec une unité de découplage (25), exécutée afin de dupliquer et de découpler le flux de données à la deuxième interface (22), avec une unité de contrôle (26) pour contrôler le flux de données découplé quant à la présence d'un trafic de données illicite, et une unité de communication (27), exécutée afin d'envoyer un message d'avertissement (28) à l'unité passerelle de sécurité (23) lorsqu'un flux de données illicite est détecté dans le flux de données, suite à quoi l'unité passerelle de sécurité (23) est prévue afin de limiter le flux de données, l'unité de surveillance (24) englobe une
- unité de découplage supplémentaire (31) exécutée afin de dupliquer et de découpler le flux de données à la première interface (21), et
- une unité de comparaison (32) exécutée afin de comparer le flux de données découplé de la première interface (21) avec le flux de données de la deuxième interface (22) et, en cas de détection de différences entre le flux de données de la deuxième interface (22) et le flux de données de la première interface (21), d'ordonner à l'unité de communication (27) d'envoyer un message d'avertissement (28) à l'unité passerelle de sécurité (23), dans lequel le contrôle (12) peut s'effectuer via des règles de filtrage conformément aux règles de filtrage actives de l'unité passerelle (23) ou via des règles de filtrage étendues.

11. Système selon la revendication 10, dans lequel l'unité passerelle de sécurité (23) et l'unité de surveillance (24) sont exécutées afin d'exécuter le procédé conformément aux revendications 3 à 8.

12. Programme informatique avec des commandes de programme pour la réalisation du procédé conformément aux revendications 1 à 7.

13. Support de données qui sauvegarde le programme informatique selon la revendication 12.
